# EUROPEAN PATENT APPLICATION

(11) **EP 1 561 516 A1**
(43) Date of publication of application: **10.08.2005**
(21) Application number: 05250657.3
(22) Date of filing: 04.02.2005
(51) Int. Cl.: B05C 11/10

(54) **Method and system for applying absorbent material to a substrate**

(30) Priority: 05.02.2004 US 542521 P; 19.01.2005 US 39239
(71) Applicant: McNEIL-PPC, Inc., Skillman, New Jersey 08558 (US)
(72) Inventor: Fung, Paul Y., South River, NJ 08885 (US); Onuschak, Anthony D., Dayton, NJ 08810 (US); Hull, Raymond J., Hampton, NJ 08827 (US); Orenga, John, Doylestown, PA 18901 (US)
(74) Representative: Mercer, Christopher Paul

(57) **Abstract**

A method and system for applying an adhesive/superabsorbent mixture to a substrate, the method and system being adapted for heating an adhesive and superabsorbent polymer mixture to a first temperature at a first pressure, the first temperature being less than the boiling temperature of said mixture at the first pressure; heating the mixture through a heat exchanger at a second pressure, the second pressure being higher than the first pressure, the heat exchanger being adapted to raise the temperature of the mixture to a second temperature that is higher than the first temperature; and selectively applying the mixture to a substrate.

## Description

### Field of the Invention

The present invention relates to a method and system for selectively applying an absorbent material to the surface of a substrate, and in particular, a method and system for applying a super absorbent polymer (SAP) and adhesive mixture to a substrate.

### Background of the Invention

Absorbent articles such as, for example, disposable diapers, sanitary napkins, pantiliners, etc., are well known in the art. Known absorbent articles may typically include, for example, a fluid permeable coverstock, a fluid impermeable back sheet and an absorbent core supported therebetween. Traditionally, absorbent cores include loosely formed cellulosic fibers and may also contain superabsorbent polymer fibers to improve the absorbent capacity of the core. The term "superabsorbent polymer" (or "SAP") as used herein, generally refers to materials which are capable of absorbing and retaining at least about 10 times their weight in body fluids under a 0.5 psi pressure. Such superabsorbent polymers include crosslinked hydrophilic polymers, such as polyvinyl alcohols, polyethylene oxides, crosslinked starches, guar gum, xanthan gum, and the like. One commercially available SAP material is AQUAKEEP SA-70, available from Sumitomo Seika Chemicals Co., Ltd.

Due to the loosely formed nature of traditional cores, such cores are rather thick and bulky in nature. More recently, in an effort to reduce the overall thickness and bulkiness of absorbent articles, particularly in feminine pads, sanitary napkins, pantiliners and the like, the traditional loosely formed absorbent core, has been replaced with a thin highly absorbent web material which frequently includes, in part, a SAP particulate material. As discussed in further detail below, the highly absorbent web material is typically formed by either incorporating the SAP particulate in the web during the web forming process, or in the alternative, the SAP particulate may be mechanically applied (using nozzles or the like) to the web after the web forming process.

A SAP particulate material may be incorporated into a web directly during the web forming process using any one of a number of known non-woven web forming techniques (e.g. air laid). During these processes, the SAP particulate material is incorporated into the web material by mixing SAP particulate material with the other fibrous components of the web prior to the formation of the web. The other fibrous components of the web may include cellulosic fibers such as wood pulp fibers, cotton linters, rayon fibers, flax, jute and the like. Hydrophilic synthetic fibers, such as polyethylene, polypropylene, nylon, polyester and the like, may be used in lieu of or in combination with cellulosic fibers.

As discussed above, the SAP particulate material may alternatively be applied to a web substrate after the web has been formed. Typically the SAP particulate is applied to the web by using mechanical delivery devices such as conduits, nozzle sprayers, and the like to thereby apply the SAP particulate material to the web. A method and system for the application of SAP particulate material to a web in this manner is described in U.S. Patent No. 5,248,524. Optionally, an adhesive may be applied to the substrate prior to the application of the SAP material so that the superabsorbent adheres to the substrate in those areas where the adhesive has been applied. Slot coaters, such as the commercially available Nordson EP-11 and the Nordson EP-45, from Nordson, and spray style applicators may be used to apply the adhesive to the web substrate.

Unfortunately, both of the prior art techniques described above have inherent drawbacks. For example, mixing the SAP material and the fibrous components of the web prior to the formation of the web normally results in the SAP material being uniformly dispersed through the web. In some applications, this may not be desired. For example, in some applications, it may be preferable to selectively apply the SAP material only to a portion of the substrate or it may be desirable to apply the SAP material to the substrate in a selected pattern. Further, depending on the particular fibrous material(s) that forms the web, it may not be desirable to mix the SAP material with the fibrous material prior to the formation of the web, since the materials may not be mutually compatible. Likewise, using conduits, nozzles, and the like to deliver the SAP material to a formed web substrate, particularly a substrate moving at a high speed, is also subject to variety of problems. For example, it is difficult to apply the SAP material to a pre-determined, localized area of the substrate. In particular, if the spraying of the SAP material is not initiated and terminated within a tightly defined time interval, the SAP particulate may be delivered to undesired locations rather than the desired location on the substrate. Furthermore, the SAP particulate material is often subject to spreading, i.e., the particulate does not remain localized on the substrate and the particulate may migrate to locations where it is not desired, thereby contaminating the process. The above problems are compounded for non-woven substrates which are often processed at line speeds that are fast enough to promote scattering of the SAP particulate to undesired locations on the substrate.

In view of the above, a need exists for a method of applying a superabsorbent material to a substrate that overcomes one or more of the above-mentioned drawbacks.

### Summary of the Invention

According to a first aspect of the invention, the present invention provides a method for applying an adhesive/superabsorbent mixture to a substrate including the steps of:
heating an adhesive and superabsorbent polymer mixture to a first temperature at a first pressure, the first temperature being less than the boiling temperature of the mixture at the first pressure;
passing the heated mixture through a heat exchanger at a second pressure, the second pressure being higher than the first pressure, the heat exchanger being adapted to raise the temperature of the mixture to a second temperature that is higher than said first temperature; and
selectively applying the mixture to a substrate.

According to a second aspect of the invention, the present invention provides a system for applying an adhesive/superabsorbent mixture to a substrate including:
a heating tank for heating an adhesive and superabsorbent polymer mixture to a first temperature at a first pressure, the first temperature being less than the boiling temperature of the mixture at the first pressure;
a heat exchanger in flow communication with the heating tank for heating the mixture at a second pressure, the second pressure being higher than the first pressure, the heat exchanger being adapted to raise the temperature of the mixture to a second temperature that is higher than the first temperature; and
an adhesive applicator in flow communication with the heat exchanger for selectively applying the mixture to a substrate.

### Brief Description of the Drawings

A more detailed description of the invention is provided below, with reference to the appended drawings in which:
Fig. 1 is a schematic view of a prior art system for applying an adhesive and superabsorbent particulate material to a substrate; and
Fig. 2 is a schematic view of the system according to the present invention for applying superabsorbent/adhesive mixture to a substrate.

### Detailed Description of the Invention

As discussed briefly in the "Background of the Invention" section above, one of the known techniques for adhering superabsorbent polymer, in particulate or fibrous form, to a substrate includes the steps of coating a surface of the substrate with an adhesive and applying superabsorbent material to the coated substrate using mechanical delivery devices such as conduits, nozzle sprayers. In this manner the SAP adheres to the web. A process of this type generally includes the following steps:
(1) heating an adhesive in a heating tank;
(2) pumping the adhesive through a conduit to an adhesive applicator for applying the adhesive to the substrate;
(3) applying the superabsorbent particulate material to the coated substrate using conduits, nozzle sprayers, or the like.

The manufacturers of the adhesives used in the above described process typically specify the recommended temperature to which the adhesive should be heated prior to pumping the same to the applicator. The specific temperature to which the adhesive should be heated varies with the specific composition of the adhesive, however the specified temperature is below the boiling point of the adhesive at ambient pressure and yet high enough to sufficiently reduce the viscosity of the adhesive to permit the adhesive to be easily pumped from the tank to the adhesive applicator.

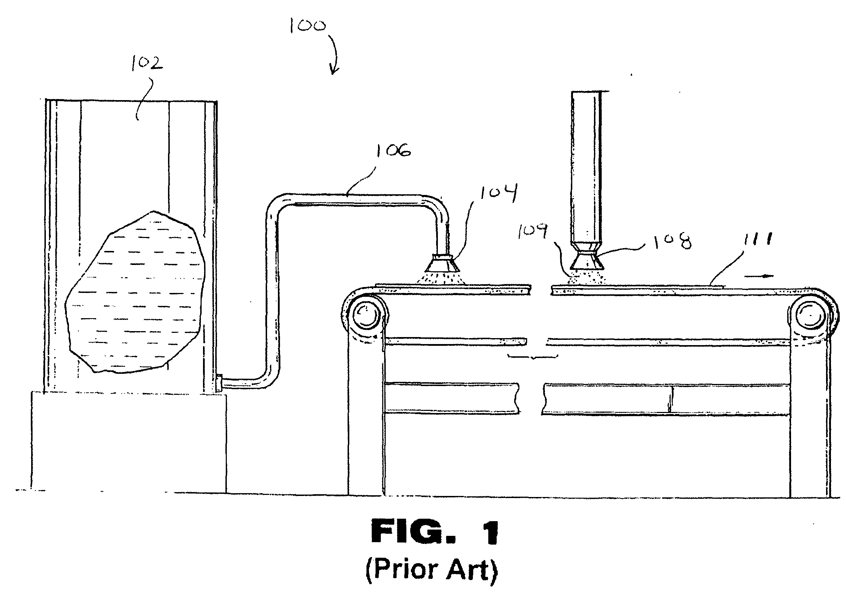

As shown in Figure 1, a conventional prior art system 100 for carrying out the above described process generally includes a heating tank 102, an adhesive applicator 104 for applying the adhesive to a moving web substrate 111 and a nozzle 108 or the like for applying superabsorbent particulate 109 to the web. A conduit 106 interconnects the tank 102 and the adhesive applicator 104 to convey adhesive from the heating tank 102 to the adhesive applicator 104 for application of the adhesive to the web 111. Conventional heating tanks typically include an integrated pump to convey the heated adhesive through the conduit 106. After the adhesive applicator 104 applies the adhesive to the web 111, the web is conveyed in a machine direction to the nozzle 108 or the like for applying the superabsorbent particulate 109 to the web. Conventionally, the conduit 106 is insulated and a plurality of heaters are often arranged in proximity to the conduit 106 to maintain the temperature of the adhesive substantially constant between the tank 102 and the adhesive applicator 104.

Commercially available heating tanks of the type used in the above system include the Nordson 3600, Orson 6000, Meltex GR and Meltex MX tanks from the Nordson Corporation. These tanks, like other such conventional tanks, have a pump incorporated therein to enable the heated adhesive to be pumped through the attached conduit to the adhesive applicator. A conventional adhesive applicator of the type used in the above described method above may comprise, for example, a slot coater. Suitable commercially available slot coaters include the Nordson EP-11 and EP-45 manufactured by the Nordson Corporation.

As discussed in the "Background" section above, prior art systems of the type shown in Figure 1 have inherent drawbacks. For example, since the superabsorbent particulate material is essentially sprayed on the coated web it is difficult to apply the particulate material to a pre-determined, localized area of the substrate. In particular, if the spraying of the powder is not initiated and terminated within a tightly defined time interval, the particulate may be delivered to undesired locations on the substrate. Furthermore, the particulate material is often subject to spreading, *i.e.,* the particulate does not remain localized on the substrate and the particulate may migrate to locations where it is not desired, thereby contaminating the process.

In an effort to overcome the problems associated with the prior art process described with reference to Figure 1, adhesive/superabsorbent polymer particulate mixtures have been developed that are intended be applied in a single step using a conventional heating tank and adhesive applicator. In this manner, the separate step of applying the superabsorbent polymer to the coated web, by a nozzle or the like, is eliminated. A commercially available superabsorbent/adhesive mixture is Fuller NW-1078, from the Fuller Corp. However, as discussed in greater detail below, the inventors of the present invention have discovered that there are inherent difficulties associated with the application of superabsorbent/adhesive mixtures when using conventional heating tank-applicator systems of the type shown in Figure 1 and described above with reference thereto.

Mixing superabsorbent particulate material with adhesive increases the viscosity of the resultant mixture as compared to the viscosity of the adhesive alone. Consequently, when the mixture is heated in a conventional heating tank to a temperature below the boiling point of the mixture, at ambient pressure, the viscosity of the mixture cannot be reduced to a sufficient extent to thereby permit a pump in a conventional heating tank to adequately convey the mixture to the coater at an acceptable flow rate. Rather, due to the increased viscosity of the mixture, as compared to the adhesive alone, the pump is only able to convey the mixture at a reduced flow rate. Further, it has been discovered that in order to reduce the viscosity of the mixture to an acceptable level, i.e. to a level where a pump of the type included with conventional heating tanks can convey the mixture at an acceptable flow rate, the mixture must be heated to a temperature in excess of the boiling point of the mixture at ambient pressure. Heating the mixture to such a high temperature is not acceptable, however, since boiling the mixture results in pump cavitations which also results in a reduction in the flow rate. Yet another problem with using conventional heating tank-coater systems to apply a superabsorbent/adhesive mixture is the pressure caused within the system is often higher than the equipment rating. Again, this is caused by the high viscosity of the superabsorbent/adhesive mixture. Still another problem with using conventional heating tank-coater systems to apply a superabsorbent/adhesive mixture to a substrate is that the applicator can accumulate a build up of the of the mixture, resulting from the high viscous nature of the mixture, thereby causing clogging.

In view of the above, the method according to the present invention includes the steps of:
(1) heating an adhesive and superabsorbent polymer mixture to a first temperature at a first pressure, the first temperature being less than the boiling temperature of the mixture at the first pressure;
(2) pumping the heated mixture through a heat exchanger at a second pressure, the second pressure being higher than the first pressure, the heat exchanger being adapted to raise the temperature of the mixture to a second temperature that is higher than the first temperature;
(3) selectively applying the mixture to a substrate.

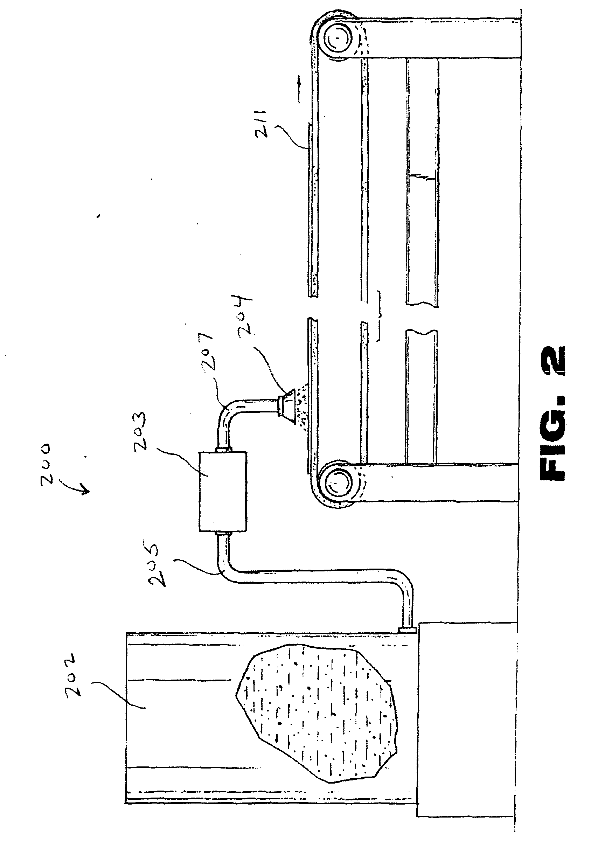

Figure 2 schematically depicts a system 200 for carrying out the method according to the present invention. The system 200 comprises a heating tank 202, a heat exchanger 203 and an adhesive applicator 204 for applying an adhesive/superabsorbent polymer mixture to a substrate 211. The system further includes a first length of conduit 205 that connects the heating tank 202 to the heat exchanger 203 and a second length of conduit 207 that connects the heat exchanger 203 with the adhesive applicator 204. The heating tank 202 includes an integrated pump for conveying the adhesive through the first length of conduit 205, through the heat exchanger 203, through the second length of conduit 207, to the adhesive applicator 204.

The Nordson 3600 tank from the Nordson Corporation may be used as the heating tank 202 and the Nordson EP-11, also manufactured by the Nordson Corporation, may be used as the adhesive applicator 204.

Clearly, the diameter of the conduits 205 and 207 have a reduced diameter relative to the diameter of the heating tank 202, Thus, the superabsorbent/adhesive mixture is conveyed through the conduits 205 and 207 at a pressure that is higher than a pressure present in the heating tank 202. The heat exchanger 203 is preferably constructed from a coiled pipe (not shown in the figures) having a diameter that is the same as the conduits 205 and 207 and also includes a plurality of heaters (not shown) that are structured and arranged to raise the temperature of the mixture within the heat exchanger. Since the superabsorbent/adhesive mixture is conveyed through the heat exchanger 203 under pressure (i.e. at a higher pressure relative to the pressure present in the tank 202) the heat exchanger 203 can heat the superabsorbent/adhesive mixture to a temperature that would exceed the boiling point temperature of the mixture at the pressure present in the heating tank 202. However, since the pressure is higher in the heat exchanger, relative to the pressure in the heating tank 202, the temperature of the superabsorbent/adhesive mixture may be raised without boiling the mixture.

Moreover, by raising the temperature of the superabsorbent/adhesive mixture in the heat exchanger the viscosity of the mixture is reduced. The reduction in the viscosity of the superabsorbent/adhesive mixture functions to reduce the overall pressure experienced by the system thereby permitting a standard pump in a commercially available heating tank to convey the superabsorbent/adhesive through the system at rate that is acceptable for manufacturing purposes. More specifically, the system shown in Fig. 2 permits a the superabsorbent/adhesive mixture to be intermittently or continuously applied, using a conventional applicator, to a substrate moving at speeds in the range of 500-1000 fpm with an add-on level of the adhesive in the range of 45-80 gsm.

### Example 1

A heating tank-coater system was constructed in accordance with the system depicted in figure 1. A Nordson 3600 heating tank was used as the heating tank. The pump included in the heating tank was a 0.833 cc/rev pump. The adhesive applicator was a Nordson EP-45 coater having a .010" thick shim with a 12.5 opening. A conventional 5/16" I.D. insulted hose was used to convey the adhesive/superabsorbent mixture from the heating tank to the applicator. A plurality of conventional heaters were arranged around the hose to maintain the fluid temperature substantially constant within the hose.

Fuller NW-1078 was used as the adhesive/superabsorbent mixture. The substrate speed was set at 850 fpm and the add-on level for applying the adhesive/superabsorbent mixture to the substrate was set to apply the adhesive mixture at a target rate of 65 gsm.

Using the above described system it was observed that heating the adhesive/superabsorbent mixture in the tank to a temperature higher than 250° F caused the mixture to boil, which in turn caused cavitation at the pump. The pump cavitation in turn caused inconsistent adhesive add-on levels. It was further observed that heating the adhesive/superabsorbent mixture to a temperature below 250° resulted in the adhesive/superabsorbent mixture being too viscous, resulting in excessive pressure within the system, thereby causing pump failure.

### Example 2

A system according to the present invention was constructed in the manner depicted in Figure 2. A Nordson 3600 heating tank was used as the heating tank the applicator was a Nordson EP-45 coater having with a .010" thick shim with a 12.5 opening. The pump included in the heating tank was a 0.833 cc/rev pump.

A heat exchanger was arranged between the heating tank and the applicator. The heat exchanger consisted of an coiled aluminum tube and a plurality of cartridge heaters arranged in heat transfer relationship with the coiled tube. The inner diameter of the aluminum tube was approximately 5/16" I.D. and the tube had an overall length of about 12 feet. A first length of 5/16" I.D. insulated hose was used to connect the heating tank to a first end of the aluminum tubing. A second length of 5/16" I.D. hose was used to connect a second end of the aluminum tubing with the applicator.

Fuller NW-1078 was used as the adhesive/superabsorbent mixture. The substrate speed was set at 850 fpm and the add-on level for applying the adhesive/superabsorbent mixture was set to apply the adhesive mixture at a target rate of 65 gsm.

The adhesive/superabsorbent mixture was heated to a temperature of 250° F in the heating tank and conveyed through the first length of tubing to the heat exchanger. Conventional heaters were arranged about the first length of tubing to maintain the temperature within the first length of tubing substantially constant at 250°.

Cartridge heaters were arranged about aluminum tubing of the heat exchanger, and the heaters were set to raise the temperature of the adhesive/superabsorbent mixture within the heat exchanger from a temperature of 250° F to a temperature of 300° F. The flow rate of the adhesive/superabsorbent mixture through the heat exchanger was measured to be about 65 grams per minute. Heaters were arranged around the second length of hose between the heat exchanger and the applicator to substantially maintain the temperature of the mixture within the second length of hose at approximately 300°.

The heat exchanger functioned to raise the temperature of the adhesive/superabsorbent mixture and thereby lower the viscosity of the adhesive/superabsorbent mixture resulting in reduction of the overall pressure in the system. This allowed the a 0.833 cc/rev pump in the Nordson 3600 heating tank to effectively convey the adhesive through the system so that the target add-on of 65 gsm of the adhesive/superabsorbent mixture was met at the substrate speed of 850 fpm.

The method and system according to the present invention has been described above with reference to the application of an adhesive/superabsorbent mixture to a continuous substrate. However, the same method and system could also be used to apply such a mixture to discrete articles, such as disposable diapers, sanitary napkins, pantiliners, etc.

The foregoing disclosure is directed to various specific embodiments of the present invention, however, other further embodiments maybe devised without departing from the scope of the present invention.

## Claims

1. A method for applying an adhesive/superabsorbent mixture to a substrate comprising the steps of:
heating an adhesive and superabsorbent polymer mixture to a first temperature at a first pressure, said first temperature being less than the boiling temperature of said mixture at said first pressure;
passing the heated mixture through a heat exchanger at a second pressure, the second pressure being higher than the first pressure, the heat exchanger being adapted to raise the temperature of the mixture to a second temperature that is higher than said first temperature; and
selectively applying the mixture to a substrate.

2. The method according to claim 1, wherein said first pressure is substantially equal to ambient pressure.

3. The method according to claim 1, wherein said mixture is applied to said substrate by an adhesive applicator.

4. The method according to claim 3, wherein said adhesive applicator is a slot coater.

5. The method according to claim 1, wherein said substrate is moving at a speed in the range of 500-1000 fpm.

6. The method according to claim 3, wherein said mixture is heated in a heating tank.

7. The method according to claim 6, further comprising:
conveying said mixture through a first length of conduit arranged between said heating tank and said heat exchanger; and
conveying said mixture through a second length of conduit arranged between said heat exchange and said adhesive applicator.

8. The method according to claim 7, further comprising:
heating said first length of conduit to maintain a temperature of said mixture within said first length of conduit substantially constant.

9. The method according to claim 7, further comprising:
heating said second length of conduit to maintain a temperature of said mixture with said second length of conduit substantially constant.

10. The method according to claim 1, wherein said first temperature is in the range of about 200° F to about 250° F.

11. The method according to claim 1, wherein said second temperature is in the range of about 250° to about 350°.

12. The method according to claim 1, wherein said first temperature is about 250° F and said second temperature is about 300° F.

13. The method according to claim 1, wherein said adhesive is applied at a rate of about 45 gsm to about 80 gsm.

14. The method according to claim 1, wherein said substrate is a non-woven substrate.

15. The method according to claim 1, wherein said second pressure is in the range of about 50 psi to about 500 psi.

16. A system for applying an adhesive/superabsorbent mixture to a substrate comprising:
a heating tank for heating an adhesive and superabsorbent polymer mixture to a first temperature at a first pressure, said first temperature being less than the boiling temperature of said mixture at said first pressure;
a heat exchanger in flow communication with said heating tank for heating said mixture at a second pressure, the second pressure being higher than the first pressure, the heat exchanger being adapted to raise the temperature of the mixture to a second temperature that is higher than said first temperature; and
an adhesive applicator in flow communication with said heat exchanger for selectively applying the mixture to a substrate.

17. The system according to claim 16, wherein said first pressure is substantially equal to ambient pressure.

18. The system according to claim 16, wherein said adhesive applicator is a slot coater.

19. The system according to claim 16, wherein said substrate is a moving substrate moving at a speed in the range of 500-1000 fpm.

20. The system according to claim 16, further comprising:
a first length of conduit arranged between and connecting said heating tank and said heat exchanger; and
a second length of conduit arranged between and connecting said heat exchange and said adhesive applicator.

21. The system according to claim 20, further comprising at least one heater structured and arranged to heat said first length of conduit and maintain a temperature of said mixture within said first length of conduit substantially constant.

22. The system according to claim 20, further comprising at lest one heater structured and arranged to heat said second length of conduit and maintain a temperature of said mixture within said second length of conduit substantially constant.

23. The system according to claim 16, wherein said first temperature is in the range of about 200° F to about 250° F.

24. The system according to claim 16, wherein said second temperature is in the range of about 250° to about 350°.

25. The system according to claim 16, wherein said first temperature is about 250° F and said second temperature is about 300° F.

26. The system according to claim 16, wherein said adhesive applicator is structured and arranged to apply said adhesive to said substrate at a rate of about 45 gsm to about 80 gsm.

27. The system according to claim 16, wherein said second pressure is in the range of about 50 psi to about 500 psi.
